(19) Europäisches Patentamt
European Patent Office
Office européen des brevets

(11) Veröffentlichungsnummer: **0 126 265**
**B1**

(12) # EUROPÄISCHE PATENTSCHRIFT

(45) Veröffentlichungstag der Patentschrift: **29.10.86**

(51) Int. Cl.⁴: **C 09 B 62/006**

(21) Anmeldenummer: **84103944.9**

(22) Anmeldetag: **09.04.84**

(54) **Reaktivfarbstoffe.**

(30) Priorität: **15.04.83 DE 3313725**
**14.07.83 DE 3325371**

(43) Veröffentlichungstag der Anmeldung:
**28.11.84 Patentblatt 84/48**

(45) Bekanntmachung des Hinweises auf die Patenterteilung:
**29.10.86 Patentblatt 86/44**

(84) Benannte Vertragsstaaten:
**CH DE FR GB IT LI**

(56) Entgegenhaltungen:
**EP - A - 0 053 750**
**EP - A - 0 073 481**

**CHEMICAL ABSTRACTS, Band 83, Nr. 2, 14. Juli 1975, Seite 98, Nr. 12180k, Columbus, Ohio, USA;**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Krüger, Heinz, Dr., Londoner Ring 4, D-6700 Ludwigshafen (DE)**
Erfinder: **Lardon, Hartmut, Dr., Brüsseler Ring 28, D-6700 Ludwigshafen (DE)**
Erfinder: **Seybold, Günther, Dr., Friedrich-Ebert-Strasse 14, D-6708 Neuhofen (DE)**

**EP 0 126 265 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

In der EP-A-53 750 sind Monofluortriazinreaktivfarbstoffe beschrieben, die als Diazokomponente einen sulfogruppenhaltigen Benzol- oder Naphthalinring und als Kupplungskomponente u.a. Aminophenylharnstoff aufweisen.

Die Erfindung betrifft Verbindungen, die in Form der freien Säuren der allgemeinen Formel I

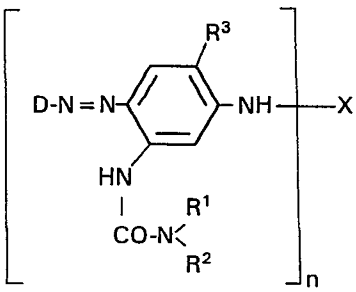

I

entsprechen, in der

D einen gegebenenfalls noch weiter substituierten, sulfogruppenhaltigen Phenyl- oder Naphthylrest,

n die Zahlen 1 oder 2,

$R^1$ Wasserstoff, $C_1$-$C_{10}$-Alkyl, Cycloalkyl, Benzyl oder einen Rest der Formel $C_2H_4OR^4$, $C_2H_4$-$OC_2H_4OR^4$, $C_3H_6OR^4$ oder $\underset{\displaystyle CH_3}{\underset{|}{CH}}-CH_2OR^4$,

$R^2$ ein Rest $R^1$ oder sulfogruppenfreies, gegebenenfalls substituiertes Phenyl,

$R^3$ Wasserstoff, Methyl, Methoxy, Chlor oder Sulfo und

X für n = 1 mindestens einen reaktiven Rest und für n = 2 eine Gruppe der Formel

$$-X^1-B-X^2-$$

bedeuten, wobei

$R^4$ $C_1$-$C_4$-Alkyl,

$X^1$ und $X^2$ reaktive Reste und

B ein Brückenglied sind, mit der Massgabe, dass nicht $R^1 = R^2 = H$ sind und dass für $R^2$ = Phenylrest und n = 1 X kein Rest der Vinylsulfonreihe ist.

Die Phenylreste $R^2$ können beispielsweise durch Chlor, Brom, Methyl, Ethyl, Propyl, Butyl, Methoxy, Ethoxy, Propoxy, Butoxy, Acetylamino oder Propionylamino substituiert sein.

Anstelle einer einzelnen Reaktivgruppe X dann auch eine Kombination aus zwei reaktiven Resten verwendet werden. Einzelne und kombinierte Reste X stammen beispielsweise von folgenden Verbindungen:

Acryloylchlorid, 3-Chlor- und 3-Brompropionylchlorid, 2,3-Dichlor- und 2,3-Dibrompropionylchlorid, Chlor- oder Bromacetylchlorid, 2,3-Dichlorchinoxalin-6-carbonsäure- oder -6-sulfonsäurechlorid, 2,4-Dichlorchinazolin-6- oder -7-carbonsäurechlorid, 2,4-Dichlorchinazolin-6-sulfonsäurechlorid, 2,4,6-Trichlorchinazolin-7-sulfonsäurechlorid, 1,4-Dichlorphthalazin-6-carbonsäurechlorid, 3,4,5,6-Tetrachlor- oder 3,4,5,6-Tetrafluorpyridazin, 3,6-Dichlorpyridazin-4-carbonsäurechlorid, 1-(2'-Chlorcarbonylethyl)- oder 1-(2'-Aminoethyl)-4,5-dichlorpyridaz-6-on, 1-(3'-Chlorcarbonylphenyl)- oder 1-(4'-Chlorcarbonylphenyl)-4,5-dichlorpyridaz-6-on, 1-(3'-Aminophenyl)- oder 2-(4'-Aminophenyl)-4,5-dichlorpyridaz-6-on, 1-(3'-Aminophenyl)- oder 1-(4'-Aminophenyl)-5-chlor-4-fluorpyridaz-6-on, 1-(3'-Chlorcarbonylphenyl)- oder 1-(4'-Chlorcarbonyl)-5-chlor-4-fluorpyridaz-6-on, 1-(2'-Chlorcarbonylethyl)-5-chlor-4-fluorpyridaz-6-on, 1-(2'Chlorcarbonyl)-4,5-dichlor-3-nitropyridaz-6-on, 2,4,6- oder 2,4,5-Trichlorpyrimidin, 2,4,5,6-Tetrachlorpyrimidin, 5-Methyl-, 5-Cyano- oder 5-Methylsulfonyl-2,4,6-trichlorpyrimidin, 4-Methyl-2,5,6-trichlorpyrimidin, 5-Chlorcarbonyl-2,4-dichlor- oder 6-Chlorcarbonyl-2,4-dichlorpyrimidin, 5-Chlorcarbonyl-2,4,6-trichlorpyrimidin, 2,4,6-Trifluorpyrimidin, 2,4,5,6-Tetrafluorpyrimidin, 5-Chlor-2,4,6-trifluoroder 5-Chlor-2,4-difluorpyrimidin, 5,6-Dichlor-2,4-difluorpyrimidin, 5-Chlor-2,4-difluor-6-methylpyrimidin, 5-Cyano-, 5-Methyl- oder 5-Methylsulfonyl-2,4,6-trifluorpyrimidin, 2-Chlor-5-chlorcarbonyl-4-methylthiazol, 2,4,6-Trichlor- oder 2,4,6-Tifluor-s-tiazin ode 2,4-Dichlor-6-methyl- oder -6-phenyl-s-triazin oder 3- oder 4-(2'-Sulfatoethylsulfonyl)-anilin.

Bevorzugte Reste X stammen insbesondere von folgenden Verbindungen:

2,4,6-Trichlor- oder 2,4,6-Trifluor-s-triazin, sowie deren primären Umsetzungsprodukten mit Ammoniak, Aminen und organischen Hydroxy- und Mercaptoverbindungen, also z.B. Methanol, Ethanol, n- oder iso-Propanol, Phenol, Thiophenol, Methyl-, Ethyl-, Propyl- oder Butylamin, 2-Hydroxy-, 2-Methoxy- oder 2-Ethoxyethylamin, Piperidin, Morpholin, Anilin, N-Methyl- oder N-Ethylanilin, 2-Methyl-, 2-Ethyl-, 2-Methoxy- oder 2-Chloranilin, Anilin-2-, -3- oder -4-sulfonsäure, Anthranil- oder N-Methylanthranilsäure, Anilin-2,4-, -2,5- oder 3,5-disulfonsäure, 4- oder 5-Sulfonanthranilsäure, Anilin-3-phosphonsäure, 1-(2'-Aminoethyl)-4,5-dichlor- oder 1-(2'-Aminoethyl)-5-chlor-4-fluor-pyridaz-6-on, 1-(3'-Aminophenyl)- oder 1-(4'-Aminophenyl)-5-chlor-4-fluorpyridaz-6-on oder 1-(3'-Aminophenyl)- oder 1-(4'-Aminophenyl)-4,5-dichlorpyridaz-6-on.

$R^1$ ist vorzugsweise $C_1$- bis $C_4$-Alkyl, Cyclohexyl oder Benzyl oder, wenn $R^2$ ein Phenylrest ist, Wasserstoff oder Methyl.

Als Reste $X^1$ und $X^2$ kommen insbesondere solche der Triazinreihe in Betracht, geeignet sind z.B.

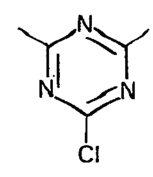

oder

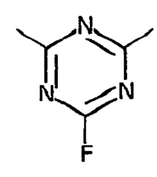

Brückenglieder B stammen in der Regel von aliphatischen oder aromatischen Diaminen, einzelne Diamine sind beispielsweise 1,2-Diaminoethan, 1,3-Diaminopropan, 1,4-Diaminobutan, Piperazin, 1,2-, 1,3- oder 1,4-Diaminobenzol, 2,4- oder 2,6-Diaminotoluol, 1,3-Diaminobenzol-4- oder 1,4-Diaminobenzol-3-sulfonsäure, 1,3-Diamino-4,6- oder 1,4-Diamino-2,5-disulfonsäure, 2,4-Diaminotoluol-6-sulfonsäure, 2,6-Diaminotoluol-4-sulfonsäure, 3,5-Diamino-2,4,6-trimethylbenzolsulfonsäure, 2,4-Diaminoanisol, 2,6-Diaminonaphthalin-1,5- und -4,8-disulfonsäure, 1,5-Diaminonaphthalin, 4,4'-Diaminodiphenyl, 4,4'-Diaminodiphenyl-2,2'-disulfonsäure, 4,4'-Diaminodiphenyl-3-sulfonsäure, 4,4'-Diamino-3,3'-dimethyldiphenyl-2,2'-disulfonsäure, 4,4'-Diaminodiphenylether, 4,4'-Diaminodiphenylsulfon, 4,4'-Diaminodiphenylmethan, 4,4'-Diaminodiphenylamin, 4,4'-Diaminodiphenylether-2,2'-disulfonsäure, 4,4'-Diaminodiphenylamin-2-sulfonsäure, 4,4'-Diaminodiphenylamin-2,3'-disulfonsäure, 4,4'- und 3,3'-Diaminodiphenylharnstoff, 4,4'-Diaminodiphenoxyethan, 4,4'-Diaminodiphenoxyethan-2,2'- und -3,3'-disulfonsäure, 4,4'-Diaminodiphenylharnstoff-2,2'-disulfonsäure, 5,5'-Diaminodiphenylharnstoff-2,2'-disulfonsäure, 4,4'-Diaminostilben-3,3'-disulfonsäure, 1,2-Bis-(4'-amino-2'-sulfophenyl)-ethan.

Bevorzugte Diamine sind z.B. 1,2-, 1,3- oder 1,4-Diaminobenzol, 2,4-oder 2,6-Diaminotoluol, 2,4-Diaminotoluol-6- oder 2,6-Diaminotoluol-4-sulfonsäure, 4,4'-Diaminodiphenyl-2,2'-disulfonsäure oder 4,4'-Diaminostilben-2,2'-disulfonsäure.

Sulfogruppenhaltige Phenyl- und Naphthylreste D stammen beispielsweise von folgenden Verrrbindungen: Anilin-2,4-, -2,5- oder -3,5-disulfonsäure, 6-Methyl- oder 6-Chloranilin-2,4-disulfonsäure, 4-Methyl- oder 4-Methoxyanilin-2,5-disulfonsäure, Anilin-2-, -3- oder -4-sulfonsäure sowie deren Chlor-, Methyl-, Methoxy- und Acylaminoderivaten, also beispielsweise 4-Methyl- oder 4-Methoxyanilin-2-sulfonsäure 3- oder 4-Acetylaminoanilin-2-sulfonsäure, 1-Aminonaphthalin-2-, -4-, -5-, -6- oder -7-sulfonsäure, 2-Aminonaphthalin-1-, -5- und -6-sulfonsäure, 1-Aminonaphthalin-3,6-, -3,7- und -5,7-disulfonsäure, 2-Aminonaphthalin-1,5-, -1,7-, -3,6-, -4,8-, -5,7- oder -6,8-disulfonsäure, 1-Aminonaphthalin-2,5,7-, -3,6,8- oder -4,6,8-trisulfonsäure, 2-Aminonaphthalin-1,5,7-, -3,6,8- oder -4,6,8-trisulfonsäure, 5-Aminomethyl-2-aminonaphthalin-1-sulfonsäure, 5-Aminomethyl-2-aminonaphthalin-1,7-disulfonsäure, 1-Sulfomethyl-2-aminonaphthalin-5-, -6- oder -7-sulfonsäure.

Bevorzugte Reste D leiten sich ab von der 2-Aminonaphthalin-3,6,8- oder -4,6,8-trisulfonsäure, Anilin-2,4- oder -2,5-disulfonsäure.

Zur Herstellung der Verbindungen der Formel I kann man z.B. Verbindungen der Formel

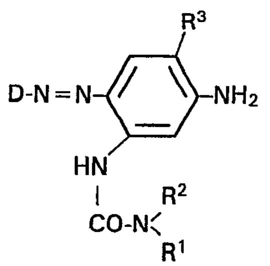

in an sich bekannter Weise mit einer Verbindungen der Formel

X-Hal

umsetzen, wobei Hal Fluor oder vorzugsweise Chlor ist und D, $R^1$, $R^2$, $R^3$ und X die angegebene Bedeutung haben.

Die Verbindungen der Formel I eignen sich zum Färben von hydroxylgruppenhaltigen Materialien, insbesondere Baumwolle, Zellwolle und auch Seide. Man erhält Gelbtöne mit guten Echtheiten. Hervorzuheben ist die hohe Farbstärke der Verbindungen der Formel I. Von besonderer Bedeutung sind Verbindungen der Formel I, bei denen X ein Rest der Triazinreihe, D der 3,6,8-Trisulfo-2-naphthylrest und $R^3$ Wasserstoff sind. $R^2$ ist vorzugsweise gegebenenfalls durch Methyl, Methoxy oder Chlor substituiertes Phenyl oder $C_1$- bis $C_4$-Alkyl, Cyclohexyl oder Benzyl.

In den folgenden Beispielen beziehen sich Anlagen über Teile und Prozente, sofern nicht anders vermerkt, auf das Gewicht.

*Beispiel 1*

38,3 Teile 2-Aminonaphthalin-3,6,8-trisulfonsäure werden in 450 Teilen Eiswasser neutral gelöst, mit 35 Teilen 3,33 N-Natriumnitritlösung und 65 Teilen 5N-Salzsäure zwei Stunden bei 0° diazotiert und dann mit 23,3 Teilen N-Cyclohexyl-N'-(3-Aminophenyl)-harnstoff versetzt. Die Kupplung wird im schwach sauren Bereich durch kontinuierliche Zugabe von 10%iger Sodalösung zuendegeführt. Nach Zugabe von 19 Teilen wässrig dispergierten Trichlortriazins wird bei 5 - 15°C und pH 6 - 7 gerührt bis keine diazotierbaren Aminogruppen mehr nachweisbar sind. Dann werden 24 Teilen 25%ige Ammoniaklösung hinzugefügt und bei 30 - 40°C zur Reaktion gebracht. Der mit Natriumchlorid abgeschiedene Farbstoff entspricht der Formel

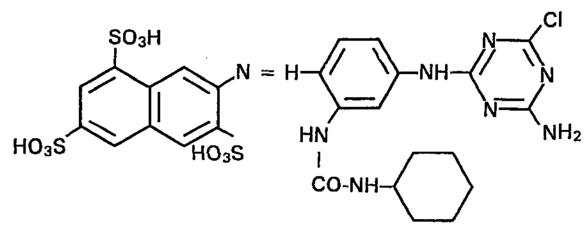

und färbt Baumwolle in billanten goldgelben Tönen mit sehr guten Echtheiten.

Weitere erfindungsgemässe Farbstoffe sind in Tabelle 1 aufgeführt, wobei in Spalte I die anstelle von 2-Aminonaphthalin-3,6,8-trisulfonsäure verwendete Diazokomponente, in Spalte II das anstelle von Cyanurchlorid verwendete Acylierungsmittel und in Spalte III das anstelle von Ammoniak verwendete Nucleophil aufgeführt sind. $R^1$, $R^2$ und $R^3$ besitzen die angegebene Bedeutung und definieren gemäss Formel I die anstelle des N-Cyclohexyl-N'-(3-Aminophenyl)-harnstoffes verwendete Kupplungskomponente.

Tabelle 1

| Beispiel | I | II | III | $R^1$ | $R^2$ | $R^3$ | Farbton |
|---|---|---|---|---|---|---|---|
| 2 | 2-Aminonaphthalin-3,6,8-trisulfonsäure | Cyanurchlorid | $NH_3$ | $CH_3$ | H | H | goldgelb |
| 3 | » | » | » | $C_2H_5$ | » | » | » |
| 4 | » | » | » | n-$C_3H_7$ | » | » | » |
| 5 | » | » | » | iso-$C_3H_7$ | » | » | » |
| 6 | » | » | » | n-$C_4$-$H_9$ | » | » | » |
| 7 | » | » | » | n-$C_6H_{13}$ | » | » | » |
| 8 | » | » | » | n-$C_8H_{17}$ | » | » | » |
| 9 | » | » | » | $CH_3$ | $CH_3$ | » | » |
| 10 | » | » | » | $-(CH_2)_3$<br>$OCH_3$ | H | » | » |
| 11 | » | » | » | $-CH_2-$ 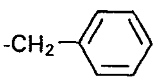 | » | » | » |
| 12 | » | » | - | » | » | » | » |
| 13 | » | » | - | n-$C_4H_9$ | » | » | » |
| 14 | » | » | $NH_3$ | iso-$C_3H_7$ | » | $CH_3$ | » |
| 15 | » | Cyanurfluorid | » | $CH_3$ | » | H | » |
| 16 | » | » | o-Toluidin | » | » | » | » |
| 17 | » | » | » | 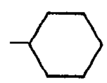 | » | » | » |
| 18 | » | » | $NH_3$ | n-$C_6H_{13}$ | » | » | » |
| 19 | » | » | » | n-$C_4H_9$ | » | » | » |
| 20 | » | Cyanurchlorid | Anilin | $CH_3$ | » | » | » |
| 21 | » | » | o-Toluidin | » | » | » | » |
| 22 | » | » | N-Methylanilin | $C_2H_5$ | » | » | » |
| 23 | » | 2-Methoxy-4,6-dichlortriazin | - | n-$C_3H_7$ | » | » | » |
| 24 | » | Cyanurchlorid | $CH_3O(CH_2)_2$-$NH_2$ | 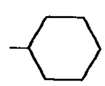 | » | » | » |
| 25 | » | 2-iso-Propoxy-4,6-dichlortriazin | - | $-CH_2-$ 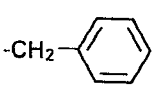 | » | » | » |
| 26 | » | 2,4,5,6-Tetrachlorpyrimidin | - | $CH_3$ | » | » | » |
| 27 | » | 2-Bromacryloylchlorid | - | » | » | » | » |
| 28 | » | 2,3-Dichlorchinoxalin-6-carbonsäurechloid | - | » | » | » | » |
| 29 | » | 5-Chlor-2,4,6-trifluorpyrimidin | - | $C_2H_5$ | » | » | » |

Tabelle 1 (Fortsetzung)

| Beispiel | I | II | III | $R^1$ | $R^2$ | $R^3$ | Farbton |
|---|---|---|---|---|---|---|---|
| 30 | 2-Aminonaphthalin-3,6,8-trisulfonsäure | 5-Methylsulfonyl-2,4,6-trifluorpyrimidin | - | $CH_3$ | H | H | goldgelb |
| 31 | » | 5-Chlor-2,4-difluor-6-methylpyrimidin | - | n-$C_3H_7$ | » | » | » |
| 32 | 2-Aminonaphthalin-4,6,8-trisulfonsäure | Cyanurchlorid | $NH_3$ | $CH_3$ | » | » | » |
| 33 | 2-Aminonaphthalin-6,8-disulfonsäure | » | » | n-$C_4H_9$ | » | » | » |
| 34 | 2-Aminonaphthalin-3,6,8-trisulfonsäure | » | 4-(2'-Sulfatoethylsulfonyl)-anilin | $CH_3$ | » | » | » |
| 35 | » | » | » | $C_2H_5$ | » | » | » |
| 36 | » | » | » | n-$C_3H_7$ | » | » | » |
| 37 | » | » | » | iso-$C_3H_7$ | » | » | » |
| 38 | » | » | » | n-$C_4H_9$ | » | » | » |
| 39 | » | » | » | $CH_2$— 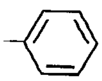 | » | » | » |
| 40 | » | » | » | 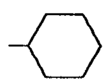 | » | » | » |
| 41 | » | » | 3-(2'-Sulfatoethylsulfonyl)-anilin | $CH_3$ | » | » | » |
| 42 | » | » | » | $C_2H_5$ | » | » | » |
| 43 | » | » | » | 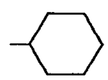 | » | » | » |
| 44 | » | » | » | n-$C_6H_{13}$ | » | » | » |
| 45 | » | » | » | n-$C_8H_{17}$ | » | » | » |
| 46 | » | » | » | n-$C_4H_9$ | » | » | » |
| 47 | » | » | » | iso-$C_3H_7$ | » | » | » |
| 48 | » | » | » | n-$C_3H_7$ | » | » | » |
| 49 | » | » | » | -$C_3H_6OCH_3$ | » | » | » |
| 50 | » | » | » | -$CH_2$— 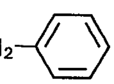 | » | » | » |
| 51 | 2-Aminonaphthalin-4,8-disulfosäure | » | » | $CH_3$ | » | » | » |
| 52 | 2-Aminonaphthalin-6,8-disulfosäure | » | » | » | » | » | » |
| 53 | 2-Aminonaphthalin-3,6,8-trisulfosäure | Cyanurfluorid | 3-(4'-Amino-6'-chlortriazinylamino)-anilin | n-$C_3H_7$ | » | » | » |

Tabelle 1 (Fortsetzung)

| Beispiel | I | II | III | $R^1$ | $R^2$ | $R^3$ | Farbton |
|---|---|---|---|---|---|---|---|
| 54 | 1-Aminonaphthalin-2,5,7-trisulfosäure | Cyanurchlorid | $NH_3$ | $CH_3$ | H | H | goldgelb |
| 55 | 1-Aminonaphthalin-3,6,8-trisulfosäure | » | 4,(4'-Amino-6'-fluortriazinylamino)-anilin | » | » | » | » |
| 56 | 2-Aminonaphthalin-3,6,8-trisulfosäure | » | 1-(3'-Aminophenyl)-5-chlor-4-fluorpyridaz-6-on | » | » | » | » |
| 57 | » | » | » | $C_2H_5$ | » | » | » |
| 58 | » | » | » | n-$C_3H_7$ | » | » | » |
| 59 | » | » | » | n-$C_4H_9$ | » | » | » |
| 60 | » | » | » | n-$C_6H_{13}$ | » | » | » |
| 61 | » | » | » | 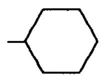 | » | » | » |
| 62 | » | » | » | -$CH_2$- 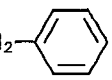 | » | » | » |
| 63 | » | » | » | $C_2H_4OC_2H_5$ | » | » | » |
| 64 | » | » | » | $CH_3$ | $CH_3$ | » | » |
| 65 | » | » | 1-(4'-Aminophenyl)-5-chlor-4-fluorpyridaz-6-on | » | H | » | » |
| 66 | » | » | » | $C_2H_5$ | » | » | » |
| 67 | » | » | » | iso-$C_3H_7$ | » | » | » |
| 68 | » | » | » | n-$C_4H_9$ | » | » | » |
| 69 | » | » | » | 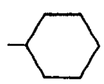 | » | » | » |
| 70 | » | » | » | -$CH_2$- 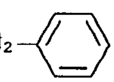 | » | » | » |
| 71 | » | » | » | n-$C_{10}H_{21}$ | » | » | » |
| 72 | » | » | 1-(2'-Aminoethyl)-5-chlor-4-fluorpyridaz-6-on | $CH_3$ | » | » | » |
| 73 | » | 1-(2'-Chlorcarbonylethyl)-5-chlor-4-fluorpyridaz-6-on | - | $CH_3$ | » | » | » |
| 74 | » | » | - | 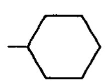 | » | » | » |
| 75 | » | Cyanurchlorid | 1-[2'-(3''-Aminophenyl)-aminocarbonylethyl]-5-chlor-4-fluorpyridaz-6-on | $CH_3$ | » | » | » |
| 76 | » | » | » | n-$C_3H_7$ | » | » | » |
| 77 | » | » | » | $CH_2$ 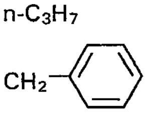 | » | » | » |
| 78 | » | » | » | 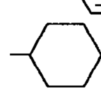 | » | » | » |

*Beispiel 79*

78 Teile des nach Beispiel 1 hergestellten 2-[4'-(3'',6'',8''-Trisulfonaphthyl-2''-azo)-3'-cyclohexylaminocarbonylaminophenylamino]-4,6-dichlortriazins, die in 1000 Teilen Wasser neutral gelöst sind, werden mit 17,2 Teilen 4,4'-Diaminodiphenyl-2,2'-disulfonsäure bei 40°C und pH 7 umgesetzt, bis keine Dichlortriazinylverbindung mehr nachweisbar ist. Nach dem Aussalzen mit Natriumchlorid und der Trocknung erhält man einen Farbstoff, der Baumwolle in echten goldgelben Nuancen färbt und der Formel

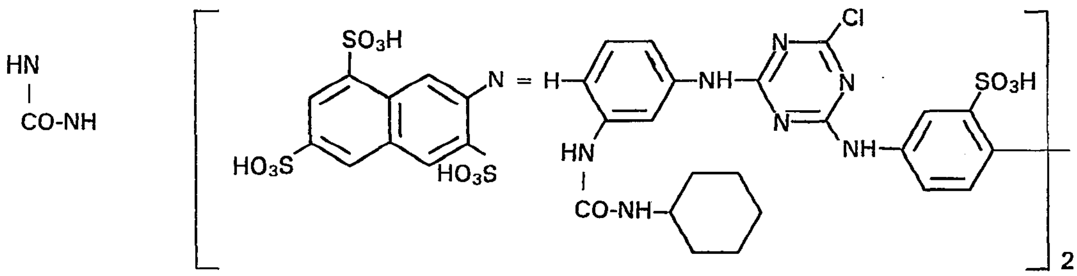

entspricht.

Weitere erfindungsgemässe Farbstoffe sind in Tabelle 2 aufgeführt. In Spalte I ist die anstelle von 2-Aminonaphthalin-3,6,8-trisulfosäure verwendete Diazokomponente, in Spalte II das anstelle von Cyanurchlorid verwendete Acylierungsmittel und in Spalte III das anstelle von 4,4'-Diaminodiphenyl-2,2'-disulfonsäure verwendete Diamin aufgeführt. $R^1$, $R^2$ und $R^3$ besitzen die angegebene Bedeutung und definieren gemäss Formel I die anstelle von N-Cyclohexyl-N'-(3-aminophenyl)-harnstoff verwendete Kupplungskomponente.

Tabelle 2

| Beispiel | I | II | III | $R^1$ | $R^2$ | $R^3$ | Farbton |
|---|---|---|---|---|---|---|---|
| 80 | 2-Aminonaphthalin-3,6,8-trisulfonsäure | Cyanurchlorid | 4,4'-Diaminodiphenyl-2,2'-disulfonsäure | $CH_3$ | H | H | goldgelb |
| 81 | » | » | » | $C_2H_5$ | » | » | » |
| 82 | » | » | » | n-$C_3H_7$ | » | » | » |
| 83 | » | » | » | i-$C_3H_7$ | » | » | » |
| 84 | » | » | » | n-$C_4$-$H_9$ | » | » | » |
| 85 | » | » | » | $(CH_2)_3OCH_3$ | » | » | » |
| 86 | » | » | » | $-CH_2$ 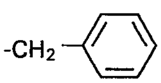 | » | » | » |
| 87 | » | » | » | n-$C_6H_{13}$ | » | » | » |
| 88 | » | » | » | n-$C_8H_{17}$ | » | » | » |
| 89 | » | » | » | $-CH_3$ | $CH_3$ | » | » |
| 90 | » | » | » | $C_2H_5$ | H | $CH_3$ | » |
| 91 | » | » | » | $CH_3$ | » | $OCH_3$ | » |
| 92 | » | » | 1,2-Bis-(4'-amino-2'-sulfophenyl)-ethan | » | » | H | » |
| 93 | » | » | » | i-$C_3H_7$ | » | » | » |
| 94 | » | » | » | 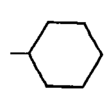 | » | » | » |
| 95 | » | » | 4,4'-Diaminodiphenylether-2,2'-disulfonsäure | $C_2H_5$ | » | » | » |
| 96 | » | » | 4,4'-Diaminodiphenylharnstoff-2,2'-disulfonsäure | $CH_3$ | » | » | » |

Tabelle 2 (Fortsetzung)

| Beispiel | I | II | III | $R^1$ | $R^2$ | $R^3$ | Farbton |
|---|---|---|---|---|---|---|---|
| 97 | 2-Aminonaphthalin-3,6,8-trisulfonsäure | Cyanurchlorid | 4,4'-Diamino-diphenyl-3-sulfonsäure | 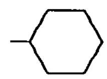 | H | H | goldgelb |
| 98 | » | » | 4,4'-Diamino-3,3'-dimethyl-diphenyl-2,2'-disulfonsäure | i-$C_3H_7$ | » | » | » |
| 99 | » | » | 4,4'-Diamino-stilben-2,2'-disulfonsäure | n-$C_4H_9$ | » | » | » |
| 100 | » | » | Piperazin | $CH_3$ | » | » | » |
| 101 | » | » | 1,2-Diamino-ethan | n-$C_6H_{13}$ | » | » | » |
| 102 | » | » | 1,3-Diamino-benzol | $CH_3$ | » | » | » |
| 103 | » | » | » | n-$C_4H_9$ | » | » | » |
| 104 | » | » | 1,2-Diamino-benzol | $CH_3$ | » | » | » |
| 105 | » | » | » | n-$C_3H_7$ | » | » | » |
| 106 | » | » | » | 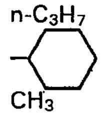 | » | » | » |
| 107 | » | » | 1,4-Diamino-benzol | $CH_3$ | » | » | » |
| 108 | » | » | » | $C_2H_5$ | » | » | » |
| 109 | » | » | 2,4-Diamino toluol | 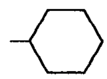 | » | » | » |
| 110 | » | » | 2,6-Diamino-toluol | n-$C_4H_9$ | » | » | » |
| 111 | » | » | 2,6-Diamino-toluol-4-sulfonsäure | » | » | » | » |
| 112 | » | » | 2,4-Diamino-toluol-6-sulfonsäure | $CH_2$ 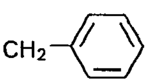 | » | » | » |
| 113 | 2-Aminonaphthalin-4,6,8-trisulfonsäure | » | 1,5-Diamino-naphthalin | $CH_3$ | $CH_3$ | » | » |
| 114 | Anilin-2,4-disulfonsäure | » | 1,2-Diamino-benzol | » | H | » | » |
| 115 | 2-Aminonaphthalin-3,6,8-trisulfonsäure | Cyanurfluorid | 1,2-Diamino benzol | $CH_3$ | » | » | » |
| 116 | » | » | 1,3-Diamino-propan | n-$C_6H_{13}$ | » | » | » |
| 117 | » | » | Piperazin | -$CH_2$ 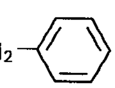 | » | » | » |
| 118 | » | Cyanurchlorid | 1,4-Diamino-benzol | n-$C_3H_7$ | » | » | » |

Tabelle 2 (Fortsetzung)

| Beispiel | I | II | III | $R^1$ | $R^2$ | $R^3$ | Farbton |
|---|---|---|---|---|---|---|---|
| 119 | 2-Aminonaphthalin-3,6,8-trisulfonsäure | Cyanurchlorid | 1,4-Diamino benzol | iso-$C_3H_7$ | H | H | goldgelb |
| 120 | » | » | » | 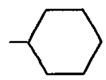 | » | » | » |
| 121 | » | » | » | 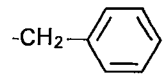 | » | » | » |
| 122 | » | » | 2,4-Diaminobenzolsulfonsäure | » | » | » | » |
| 123 | » | » | 2,5-Diaminobenzolsulfonsäure | » | » | » | » |

*Beispiel 124*

38,3 Teile 2-Aminonaphthalin-3,6,8-trisulfonsäure werden in 450 Teilen Eiswasser neutral gelöst, mit 35 Teilen 3,33 N-Natriumnitritlösung und 65 Teilen 5N-Salzsäure zwei Stunden bei 0° diazotiert und dann mit 27,7 Teilen N-Phenyl-N'-(3-Aminophenyl)-harnstoff versetzt. Die Kupplung wird im schwach sauren Bereich durch kontinuierliche Zugabe von 10%iger Sodalösung zuendegeführt. Nach Zugabe von 19 Teilen wässrig dispergierten Trichlortriazins wird bei 5 - 15°C und pH 6 - 7 gerührt bis keine diazotierbaren Aminogruppen mehr nachweisbar sind. Dann werden 24 Teile 25%ige Ammoniaklösung hinzugefügt und bei 30 - 40°C zur Reaktion gebracht. Der mit Natriumchlorid abgeschiedene Farbstoff entspricht der Formel

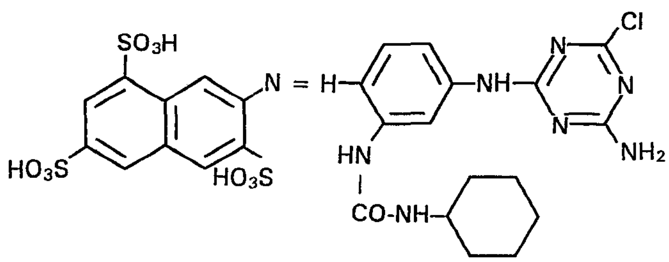

und färbt Baumwolle in brillanten goldgelben Tönen mit sehr guten Echtheiten.

Weitere erfindungsgemässe Farbstoffe sind in Tabelle 3 aufgeführt, wobei Spalte I die gegebenenfalls anstelle von 2-Aminonaphthalin-3,6,8-trisulfosäure verwendete Diazokomponente, Spalte II das gegebenenfalls anstelle von Cyanurchlorid verwendete Acylierungsmittel und Spalte III das gegebenenfalls anstelle von Ammoniak verwendete Nucleophil angeben. $R^1$, $R^2$ und $R^3$ definieren gemäss Formel I die Kupplungskomponente.

Tabelle 3

| Beispiel | I | II | III | $R^1$ | $R^2$ | $R^3$ | Farbton |
|---|---|---|---|---|---|---|---|
| 125 | 2-Aminonaphthalin-3,6,8-trisulfonsäure | Cyanurchlorid | $NH_3$ | $CH_3$ | 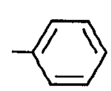 | H | goldgelb |
| 126 | » | » | » | H | 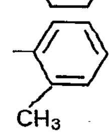 | H | » |
| 127 | » | » | » | H | 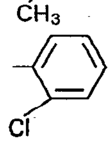 | H | » |
| 128 | » | » | » | H | 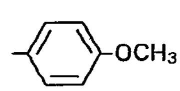 | H | » |

Tabelle 3 (Fortsetzung)

| Beispiel | I | II | III | $R^1$ | $R^2$ | $R^3$ | Farbton |
|---|---|---|---|---|---|---|---|
| 129 | 2-Aminonaphthalin-3,6,8-trisulfonsäure | Cyanurchlorid | $NH_3$ | H | 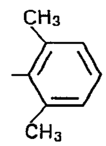 | H | goldgelb |
| 130 | » | » | » | H | 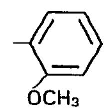 | H | » |
| 131 | » | » | » | H | 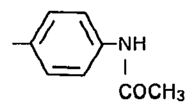 | H | » |
| 132 | » | » | » | H | 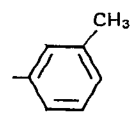 | H | » |
| 133 | » | » | » | H | 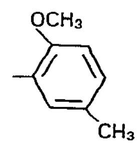 | H | » |
| 134 | » | » | » | H | 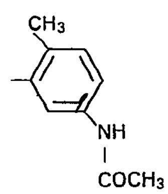 | H | » |
| 135 | » | Cyanurfluorid | » | H | 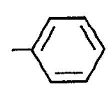 | H | » |
| 136 | » | » | » | H | 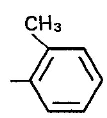 | H | » |
| 137 | » | » | » | H | 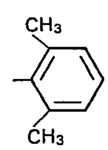 | H | » |
| 138 | » | 2-Methoxy-4,6-dichlortriazin | - | H | 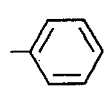 | H | » |
| 139 | » | 2,4,5,6-Tetrachlorpyrimidin | - | H | » | H | » |
| 140 | » | Cyanurfluorid | N-Methylanilin | H | » | H | » |
| 141 | » | » | o-Toluidin | H | » | H | » |

Tabelle 3 (Fortsetzung)

| Beispiel | I | II | III | $R^1$ | $R^2$ | $R^3$ | Farbton |
|---|---|---|---|---|---|---|---|
| 142 | 2-Aminonaphthalin-3,6,8-trisulfonsäure | 5-Chlor-2,4,6-trifluorpyrimidin | - | H | 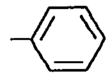 | H | goldgelb |
| 142 | » | 5-Methylsulfonyl-2,4,6-trifluorpyrimidin | - | H | » | H | » |
| 143 | » | 5-Chlor-2,4-difluor-6-methylpyrimidin | - | H | » | H | » |
| 144 | » | 2,3-Dichlor-chinoxalin-6-carbonsäurechlorid | - | H | » | H | » |
| 145 | » | Cyanurchlorid | 1-(3'-Aminophenyl)-5-chlor-4-fluorpyridaz-6-on | H | » | H | » |
| 146 | » | » | 1-(4'-Aminophenyl)-5-chlor-4-fluorpyridaz-6-on | H | » | H | » |
| 147 | » | » | » | H | » | $CH_3$ | » |
| 148 | » | » | 2-Amino-4-[3'-(5''-Chlor-4''-fluorpyridaz-6''-on-1''-yl)-propionyl]-aminobenzolsulfonsäure | H | » | H | » |
| 149 | » | » | » | H | 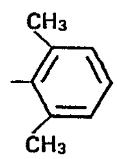 | H | » |
| 150 | 2-Aminonaphthalin-4,6,8-trisulfonsäure | » | $NH_3$ | H | 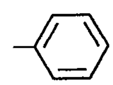 | H | » |
| 151 | 2-Aminonaphthalin-4,8-disulfonsäure | » | » | H | » | H | » |
| 152 | 2-Aminonaphthalin-6,8-disulfonsäure | » | » | H | » | H | » |
| 153 | 2-Aminonaphthalin-3,6,8-trisulfonsäue | » | 2-Amino-4-(4'-amino-6'-chlor-1',3',5'-triazinyl)-aminobenzolsulfonsäure | H | » | H | » |
| 154 | » | » | 2-Amino-4-[4'-chlor-6'-(3''-sulfophenyl)-amino-1',3',5'-triazinyl]-aminobenzolsulfonsäure | H | » | H | » |
| 155 | » | Cyanurfluorid | » | H | » | H | » |

Tabelle 3 (Fortsetzung)

| Beispiel | I | II | III | $R^1$ | $R^2$ | $R^3$ | Farbton |
|---|---|---|---|---|---|---|---|
| 156 | 2-Aminonaphthalin-3,6,8-trisulfonsäure | Cyanurchlorid | 2-Amino-4-(4'-amino-6-fluor-1',3',5'-triazinyl)-aminobenzolsulfonsäure | H | 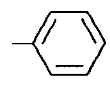 | H | goldgelb |

*Beispiel 157*

72 Teile nach Beispiel 124 hergestellten 2-[4'-(3'',6'',8''-Trisulfonaphthyl-2''-azo)-3'-(phenylaminocarbonylamino)-phenylamino]-4,6-dichlortriazins, die in 1000 Teilen Wasser neutral gelöst sind, werden mit 17,2 Teilen 4,4'-Diaminodiphenyl-2,2'-disulfonsäure bei 40°C und pH 7 umgesetzt, bis keine Dichlortiazinylverbindung mehr nachweisbar ist. Nach dem Aussalzen mit Natriumchlorid und Trocknung erhält man einen Farbstoff, der Baumwolle in echten goldgelben Nuancen färbt und der Formel

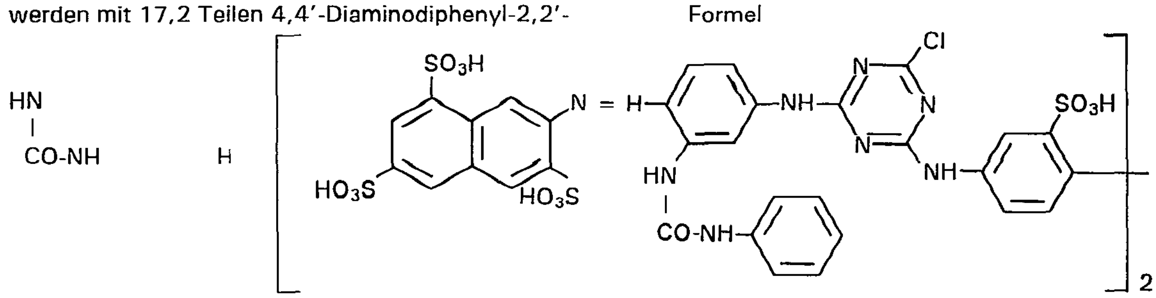

entspricht.

Weitere erfindungsgemässe Farbstoffe sind in Tabelle 4 aufgeführt. Spalte III gibt dabei das gegebenenfalls anstelle von 4,4'-Diaminodiphenyl-2,2'-disulfonsäure verwendete Diamin an.

Tabelle 4

| Beispiel | I | II | III | $R^1$ | $R^2$ | $R^3$ | Farbton |
|---|---|---|---|---|---|---|---|
| 158 | 2-Aminonaphthalin-3,6,8-trisulfonsäure | Cyanurchlorid | 4,4'-Diaminodiphenyl-2,2'-disulfonsäure | H | 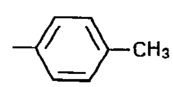 | H | goldgelb |
| 159 | » | » | » | $CH_3$ | » | H | » |
| 160 | » | » | » | » | 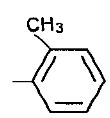 | H | » |
| 161 | » | » | » | » | » | $CH_3$ | » |
| 162 | » | » | » | H | 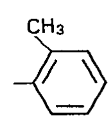 | H | » |
| 163 | » | » | » | H | 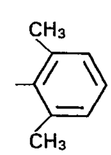 | H | » |
| 164 | » | » | » | H | 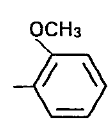 | H | » |

Tabelle 4 (Fortsetzung)

| Beispiel | I | II | III | R¹ | R² | R³ | Farbton |
|---|---|---|---|---|---|---|---|
| 165 | 2-Aminonaphthalin-3,6,8-trisulfonsäure | Cyanurchlorid | 4,4'-Diamino-diphenyl-2,2'-disulfonsäure | H | 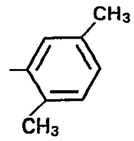 | H | goldgelb |
| 166 | » | » | » | H | 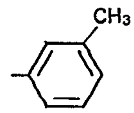 | H | » |
| 167 | » | » | » | H | 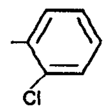 | H | » |
| 168 | » | » | » | H | 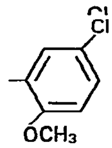 | H | » |
| 169 | » | » | » | H | 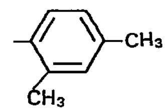 | H | » |
| 170 | » | » | 4,4'-Diaminodiphenylsulfon-3,3'-disulfonsäure | H | 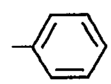 | H | » |
| 171 | » | » | 4,4'-Diaminodiphenylether-2,2'-disulfonsäure | H | » | H | » |
| 172 | » | » | 4,4'-Diaminodiphenylharnstoff-2,2'-disulfonsäure | H | » | H | » |
| 173 | » | » | 4,4'-Diaminodiphenyl-3-sulfonsäure | H | » | H | » |
| 174 | » | » | 4,4'-Diaminodi-diphenyl-3',3'-dicarbonsäure | H | » | H | » |
| 175 | » | » | 4,4'-Diamino-3,3'-dimethyl-diphenyl-2,2'-disulfonsäure | H | » | H | » |
| 176 | » | » | 4,4'-Diamino-stilben-2,2'-disulfonsäure | H | » | H | » |
| 177 | » | » | 1,4-Diamino-benzol | H | » | H | » |
| 178 | » | » | 1,3-Diamino-benzol | H | » | H | » |

Tabelle 4 (Fortsetzung)

| Beispiel | I | II | III | $R^1$ | $R^2$ | $R^3$ | Farbton |
|---|---|---|---|---|---|---|---|
| 179 | 2-Aminonaphthalin-3,6,8-trisulfonsäure | Cyanurchlorid | 1,2-Diaminobenzol | H | 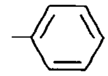 | H | goldgelb |
| 180 | » | » | 1,2-Diaminocyclohexan | H | » | H | » |
| 181 | » | » | 2,4-Diaminotoluol | H | » | H | » |
| 182 | » | » | 2,6-Diaminotoluol | H | » | H | » |
| 183 | » | » | 2,5-Diaminoanisol | H | » | H | » |
| 184 | » | » | 2,4-Diaminobenzolsulfonsäure | H | » | H | » |
| 185 | » | » | 2,5-Diaminobenzolsulfonsäure | H | » | H | » |
| 186 | » | » | 2,6-Diaminotoluol-4-sulfonsäure | H | » | H | » |
| 187 | » | » | 2,4-Diaminotoluol-6-sulfonsäure | H | » | H | » |
| 188 | » | » | 2-Chlor-3,5-diaminobenzolsulfonsäure | H | » | H | » |
| 189 | » | » | Piperazin | H | » | H | » |
| 190 | » | » | 1,2-Diaminoethan | H | » | H | » |
| 191 | » | » | 1,3-Diaminopropan | H | » | H | » |
| 192 | » | » | N-(2-Aminoethyl)-piperazin | H | » | H | » |
| 193 | » | » | Piperazin | $CH_3$ | » | $CH_3$ | » |
| 194 | » | » | 1,4-Diaminobenzol | » | 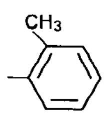 | $OCH_3$ | » |

*Beispiel 195*

72 Teile nach Beispiel 124 hergestellten 2-[4'-(3'',6'',8''-Trisulfonaphthyl-2''-azo)-3'-(phenylaminocarbonylamino)-phenylamino]-4,6-dichlortriazins werden als neutrale Lösung in 800 Teilen Wasser zu einer neutralen 40°C warmen Lösung von 18,9 Teilen 1,3-Phenylendiamin-4-sulfonsäure getropft, wobei durch portionsweise Zugabe von 7 Teilen Natriumbicabonat ein pH-Wert von 5 - 7 eingestellt wird. Sobald keine Dichlortriazinylverbindung mehr nachweisbar ist, wird auf 10 - 15°C gekühlt, mit einer feinen Suspension von 21 Teilen Cyanurchlorid in 200 Teilen Eiswasser versetzt und bei pH 6 - 7 gerührt. Nach beendeter Umsetzung werden bei 35 - 40°C 25 Teile 25%ige Ammoniaklösung zugetropft.

Das erhaltene Farbstoff entspricht der Formel

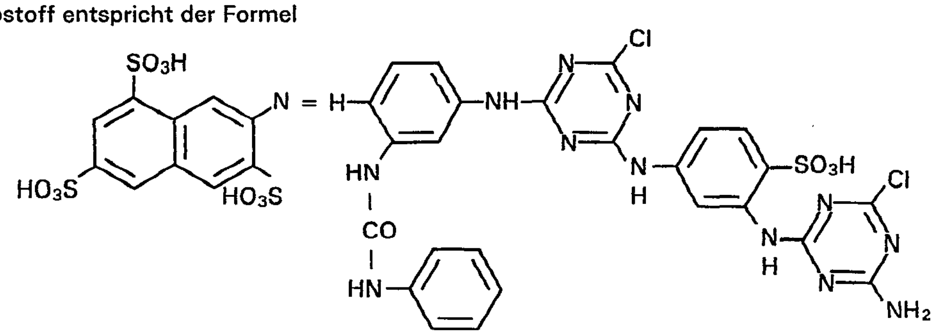

und lässt sich z.B. durch Sprühtrocknung der Reaktionslösung oder Aussalzen mit Natriumchlorid isolieren. Er färbt Baumwolle in echten, goldgelben Tönen.

Weitere erfindungsgemässe Farbstoffe, die gemäss Beispiel 195 erhalten wurden, sind in Tabelle 5 aufgeführt, wobei in Spalte I die im p-Aminoazofarbstoff verwendete Kupplungskomponente, in Spalte II das Diamin, in Spalte III das im zweiten Acylierungsschritt verwendete Acylierungsmittel und in Spalte IV das gegebenenfalls anstelle von Ammoniak verwendete Nucleophil aufgeführt sind.

Tabelle 5

| Beispiel | I | II | III | IV | Farbton |
|---|---|---|---|---|---|
| 196 | N-(o-Tolyl)-N'-(3-aminophenyl)-harnstoff | 1,3-Diaminobenzol-4-sulfonsäure | Cyanurchlorid | $NH_3$ | goldgelb |
| 197 | N-(Phenyl)-N'-(3-aminophenyl)-harnstoff | 1,4-Diaminobenzol-2-sulfonsäure | » | » | » |
| 198 | » | 2,4-Diaminotoluol-6-sulfonsäure | » | » | » |
| 199 | » | 2,4-Diaminochlorbenzol-6-sulfonsäure | » | » | » |
| 200 | » | 1,3-Diaminobenzol | » | 3-Aminobenzolsulfonsäure | » |
| 201 | » | 1,3-Diaminobenzol-4-sulfonsäure | 2-Methoxy-4,6-dichlortriazin | - | » |
| 202 | » | 2,4-Diaminotoluol | Cyanurchlorid | 3-Aminobenzolsulfonsäure | » |

**Patentansprüche**

1. Verbindungen, die in Form der freien Säuren der allgemeinen Formel I

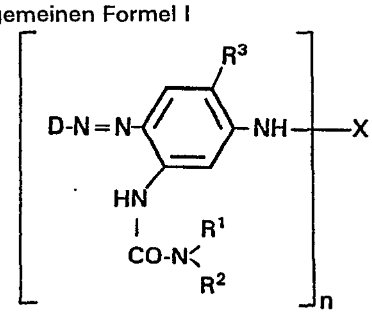

I

entsprechen, in der

D einen gegebenenfalls noch weiter substituierten, sulfogruppenhaltigen Phenyl- oder Naphthylrest,

n die Zahlen 1 oder 2,

$R^1$ Wasserstoff, $C_1$-$C_{10}$-Alkyl, Cycloalkyl, Benzyl oder einen Rest der Formel $C_2H_4OR^4$, $C_2H_4$-$OC_2H_4OR^4$, $C_3H_6OR^4$ oder $CH(CH_3)$-$CH_2OR^4$,

$R^2$ ein Rest $R^1$ oder sulfogruppenfreies, gegebenenfalls substituiertes Phenyl,

$R^3$ Wasserstoff, Methyl, Methoxy, Chlor oder Sulfo und

X für n = 1 mindestens einen reaktiven Rest und für n = 2 eine Gruppe der Formel

$$-X^1-B-X^2-$$

bedeuten, wobei

$R^4$ $C_1$-$C_4$-Alkyl,

$X^1$ und $X^2$ reaktive Reste und

B ein Brückenglied sind, mit der Massgabe, dass nicht $R^1 = R^2 = H$ sind und dass für R = Phenyl und n = 1 X kein Rest der Vinylsulfonreihe ist.

2. Verbindungen gemäss Anspruch 1, wobei D 2,4-Disulfophenyl, 2,5-Disulfophenyl oder 3,6,7-Trisulfonaphthyl-2 ist.

3. Verbindungen gemäss Anspruch 1, wobei $R^1$ $C_1$- bis $C_4$-Alkyl, Cycloalkyl oder Benzyl ist.

4. Verbindungen gemäss Anspruch 3, wobei $R^2$ Wasserstoff ist.

5. Verbindungen gemäss Anspruch 1, wobei $R^3$ Wasserstoff ist.

6. Verbindungen gemäss Anspruch 1, wobei X für n = 1 und $R^2 \neq$ Phenyl mindestens ein reaktiver Rest der Triazinreihe gegebenenfalls in Kombination mit einem Rest der Vinylsulfonreihe ist.

7. Verbindungen gemäss Anspruch 1, wobei X für n = 2 ein Rest der Formel $-X^1-B-X^2$ ist, in der $X^1$ und $X^2$ reaktive Reste der Triazinreihe und B ein Brückenglied, das von einem aliphatischen oder aromatischen Diamin stammt, sind.

8. Verbindungen gemäss Anspruch 1, wobei in der Formel X ein Rest der Triazinreihe, D der 3,6,8-Trisulfo-2-naphthylrest, $R^3$ und $R^2$ Wasserstoff und $R^1$ der Methyl-, Ethyl-, n- oder iso-Propyl-, n-Butyl-, Cyclohexyl- oder Benzylrest sind.

9. Verbindungen gemäss Anspruch 1, wobei D 3,6,8-Trisulfonaphthyl-2 und $R^2$ und $R^3$ Wasserstoff sind und X die für Anspruch 7 und $R^1$ die für Anspruch 8 angegebene Bedeutung haben.

10. Verbindungen gemäss Anspruch 1, wobei $R^1$ Wasserstoff oder Methyl und $R^2$ gegebenenfalls durch Methyl, Methoxy oder Chlor substituiertes Phenyl sind.

11. Verbindungen gemäss Anspruch 1, wobei X für n = 1 mindestens ein faserreaktiver Rest der Triazin-, Pyrimidin-, Pyridazon-, Chinoxalin-, Chinazolin-, Phthalazin-, Thiazol-, Benzthiazol-, Acryl-, Halogenpropionyl- oder Halogenacetylreihe ist.

**Claims**

1. A compound which, in the form of the free acid, corresponds to the general formula I

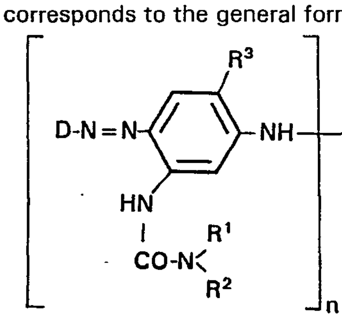

I

where

D is a sulfo-containing phenyl or naphthyl radical which may be further substituted,

n is 1 or 2,

$R^1$ is hydrogen, $C_1$-$C_{10}$-alkyl, cycloalkyl, benzyl or a radical of the formula $C_2H_4OR^4$, $C_2H_4OC_2H_4OR^4$, $C_3H_6OR^4$ or $CH(CH_3)-CH_2OR^4$,

$R^2$ is a radical $R^1$ or an unsubstituted or substituted, sulfo-free phenyl radical,

$R^3$ is hydrogen, methyl, methoxy, chlorine or sulfo and

X is at least one reactive radical if n is 1 or, if n is 2, X is a group of the formula

$$-X^1-B-X^2-$$

where

$R^4$ is $C_1$-$C_4$-alkyl,

$X^1$ and $X^2$ are each a reactive radical, and

B is a bridge, member, with the provisos that $R^1$ and $R^2$ are not simultaneously H, and that X is not a radical from the vinylsulfone series when $R^2$ is phenyl and n is 1.

2. A compound as claimed in claim 1, wherein D is 2,4-disulfophenyl, 2,5-disulfophenyl or 3,6,7-trisulfonaphth-2-yl.

3. A compound as claimed in claim 1, wherein $R^1$ is $C_1$-$C_4$-alkyl, cycloalkyl or benzyl.

4. A compound as claimed in claim 3, wherein $R^2$ is hydrogen.

5. A compound as claimed in claim 1, wherein $R^3$ is hydrogen.

6. A compound as claimed in claim 1, wherein, if n is 1 and $R^2$ is not phenyl, X is at least one reactive radical from the triazine series, optionally in combination with a radical from the vinylsulfone series.

7. A compound as claimed in claim 1, wherein, if n is 2, X is a radical of the formula $-X^1-B-X^2$, where $X^1$ and $X^2$ are each a reactive radical from the triazine series and B is a bridge member which is derived from an aliphatic or aromatic diamine.

8. A compound as claimed in claim 1, wherein, in the formula, X is a radical from the triazine series, D is 3,6,8-trisulfonaphth-2-yl, $R^3$ and $R^2$ are each hydrogen, and $R^1$ is methyl, ethyl, n- or iso-propyl, n-butyl, cyclohexyl or benzyl.

9. A compound as claimed in claim 1, wherein D is 3,6,8-trisulfonaphth-2-yl, $R^2$ and $R^3$ are each hydrogen, X has the meaning given in claim 7, and $R^1$ has the meanings given in claim 8.

10. A compound as claimed in claim 1, wherein $R^1$ is hydrogen or methyl, and $R^2$ is phenyl which is unsubstituted by methyl, methoxy or chlorine.

11. A compound as claimed in claim 1, wherein, if n is 1, X is at least one fiber-reactive radical from the triazine, pyrimidine, pyridazone, quinoxaline, quinazoline, phthalazine, thiazole, benzothiazole, acrylyl, halopropionyl or haloacetyl series.

**Revendications**

1. Composés qui, sous la forme des acides libres, répondent à la formule générale I

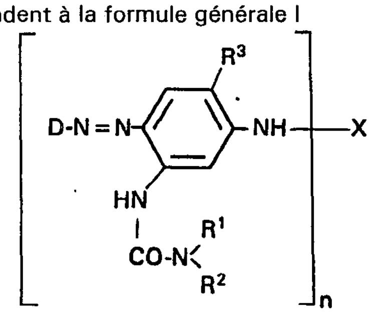

I

dans laquelle

D est un racidal phényle ou naphthyle contenant des groupements sulfo et présentant éventuellement d'autres substitutions,

n est le nombre 1 ou 2,

$R^1$ est un atome d'hydrogène ou un radical alkyle en $C_1$ à $C_{10}$, cycloalkyle, benzyle ou un groupement de formule $C_2H_4OR^4$, $C_2H_4OC_2H_4OR^4$, $C_3H_6OR^4$ ou $CH\text{-}CH_2OR^4$,

$$\underset{\displaystyle CH_3}{\overset{|}{\phantom{X}}}$$

$R^2$ est un radical $R^1$ ou un radical phényle éventuellement substitué, dépourvu de groupement sulfo,

$R^3$ est un atome d'hydrogène, un groupement méthyle, méthoxy, un atome de chlore ou un groupement sulfo et

X pour n = 1, est au moins un radical réactif et pour n = 2, est un groupement de formule

$$-X^1\text{-}B\text{-}X^2\text{-}$$

$R^4$ étant un radical alkyle en $C_1$ à $C_4$,

$X^1$ et $X^2$ étant des radicaux réactifs et

B étant un maillon de pontage, avec cette condition que $R^1 \neq R^2 \neq H$ et que pour $R^2$ = phényle et n = 1, X n'est pas un radical de la série vinylsulfonique.

2. Composés selon la revendication 1, dans lesquels D est un groupement 2,4-disulfophényle, 2,5-disulfophényle ou 3,6,7-trisulfonaphtyle-2.

3. Composés selon la revendication 1, dans lesquels $R^1$ est un radical alkyle en $C_1$ à $C_4$, cyclohexyle ou benzyle.

4. Composés selon la revendication 3, dans lesquels $R^2$ est un atome d'hydrogène.

5. Composés selon la revendication 1, dans lesquels $R^3$ est un atome d'hydrogène.

6. Composés selon la revendication 1, dans lesquels X pour n = 1 et $R^2 \neq$ phényle, est au moins un radical réactif de la série triazinique, éventuellement en combinaison avec un radical de la série vinylsulfonique.

7. Composés selon la revendication 1, dans lesquels X, pour n = 2, est un radical de formule $-X^1\text{-}B\text{-}X^2$, dans laquelle $X^1$ et $X^2$ sont des radicaux réactifs de la série triazinique et Best un maillon de pontage, qui dérive d'une diamine aliphatique ou aromatique.

8. Composés selon la revendication 1, dans la formule desquels X est un radical de la série triazinique, D est le radical 3,6,8-trisulfo-2-naphtyle, $R^3$ et $R^2$ sont des atomes d'hydrogène et $R^1$ est le radical méthyle, éthyle, n- ou iso-propyle, n-butyle, cyclohexyle ou benzyle.

9. Composés selon la revendication 1, dans lesquels D est le radical 3,6,8-trisulfonaphtyle-2, $R^2$ et $R^3$ sont des atomes H, X a les significations données dans la revendication 7 et $R^1$ des significations données dans la revendication 8.

10. Composés selon la revendication 1, dans lesquels $R^1$ est un atome d'hydrogène ou le radical méthyle et $R^2$ est un radical phényle éventuellement substitué par un radical méthyle, méthoxy ou un atome de chlore.

11. Composés selon la revendication 1, dans lesquels X pour n = 1 est au moins un radical réactif avec les fibres, de la série des triazines, des pyrimidines, des pyridazones, des quinoxalines, des quinazolines, des phtalazines, des thiazoles, des benzothiazoles, ou des séries acrylique, halogénopropionique ou halogéno-acétylique.